# EUROPÄISCHE PATENTSCHRIFT

(11) **EP 1 193 430 B1**
(45) Veröffentlichungstag und Bekanntmachung des Hinweises auf die Patenterteilung: **19.12.2007**
(21) Anmeldenummer: 01203527.5
(22) Anmeldetag: 18.09.2001
(51) Int. Cl.: F16K 1/36

(54) **Ventil, insbesondere Heizkörperventil**
Valve, particularly radiator valve
Soupape, en particulier soupape de radiateur

(30) Priorität: 30.09.2000 DE 10048689
(43) Veröffentlichungstag der Anmeldung: 03.04.2002
(73) Patentinhaber: Danfoss A/S, 6430 Nordborg (DK)
(72) Erfinder: Garm, Fester, 8600 Silkeborg (DK); Messmer, James David, 8000 Aarhus (DK)

(56) Entgegenhaltungen:
- DE-A- 2 614 510
- DE-B- 1 098 311
- DE-B- 1 288 857
- GB-A- 930 908
- US-A- 4 739 793
- US-A- 5 580 031

## Beschreibung

Die Erfindung betrifft ein Heizkörperventil mit einem Gehäuse, das einen Einströmanschluß und einen Ausströmanschluß aufweist, wobei dem Strömungspfad zwischen Einströmanschluß und Ausströmanschluß eine Absperreinrichtung angeordnet ist, die einen Ventilsitz und ein damit zusammenwirkendes Ventilelement aufweist, wobei das Ventilelement in einer Ventilkammer bewegbar ist.

Ein derartiges als Heizkörperventil ausgebildetes Ventil ist aus WO 99/22282 bekannt.

Üblicherweise ist bei einem derartigen Heizkörperventil die Durchströmrichtung vorgegeben und mit einem Pfeil auf der Außenseite des Gehäuses markiert. Die Durchströmrichtung sollte beachtet werden, um Störungen zu vermeiden, die sich vor allem durch unangenehme Geräusche bemerkbar machen. Normalerweise ist die ventilsitzseitige Seite der Absperreinrichtung mit dem Einlaßanschluß und die ventilelementseitige Seite der Absperreinrichtung mit dem Auslaßanschluß verbunden. Wenn das Ventilelement auf den Ventilsitz zu bewegt wird, findet eine allmähliche Drosselung des durchströmenden Wassers statt. Bei dieser "korrekten" Betriebsweise ergeben sich normalerweise keine Probleme.

Anders sieht es aus, wenn das Ventil falsch angeschlossen wird, d.h. die Speiseleitung eines Heizungssystem mit dem Auslaßanschluß verbunden wird. In diesem Fall strömt das Wasser über das Ventilelement zum Ventilsitz und von dort in den Einlaßanschluß. Wenn das Ventil schließt, wird das Ventilelement auf den Ventilsitz zu bewegt. Wenn der Spalt zwischen dem Ventilelement und dem Ventilsitz eine gewisse Größe unterschreitet, schließt das Ventilelement schlagartig, was einen ebenso plötzlichen Druckanstieg am Auslaßanschluß zur Folge hat. Dieser Druckanstieg äußert sich in einem Wasserschlag, der nicht nur unangenehme Geräusche zur Folge hat, sondern auch Beschädigungen im Leitungssystem hervorrufen kann. Dieser Wasserschlag kann aber auch durch einen externen Impuls ausgelöst werden, beispielsweise durch ein anderes Ventil, das plötzlich schließt oder öffnet, eine Pumpe, die anläuft oder stoppt, oder anderes. Diese Ursachen, die noch nicht alle restlos geklärt sind, sind besonders kritisch dann, wenn das Ventil falsch montiert ist.

Die Gefahr einer Fehlmontage von Heizkörperventilen ist nicht nur aufgrund von mangelnden Qualifikationen des Montagepersonals gegeben, sondern auch dann, wenn man in älteren Häusern oder Anlagen nicht mehr genau feststellen kann, welche Leitung zum Zufluß und welche zum Abfluß des Heizwassers verwendet wird.

Der Erfindung liegt die Aufgabe zugrunde, ein Ventil unabhängig von der Durchströmrichtung betreiben zu können.

Diese Aufgabe wird bei einem Heizkörperventil der eingangs genannten Art dadurch gelöst, daß die Absperreinrichtung eine Anschlaghilfseinrichtung aufweist, die dem am Ventilsitz anliegenden Ventilelement oder einem Teil davon eine Weiterbewegung in Schließrichtung unter Vergrößerung des Volumens der Ventilkammer erlaubt.

Wenn das Heizkörperventil "normal" betrieben wird, dann wird das Ventilelement durch den Ventilsitz hindurch angeströmt. Bei dieser Strömungsrichtung entstehen weder beim Öffnen noch beim Schließen des Ventils größere Probleme, die mit einer Geräuschbildung verbunden sind. Aber auch, wenn die Strömungsrichtung durch das Heizkörperventil umgekehrt wird, ist mit der vorliegenden Ausbildung gewährleistet, daß der sogenannte "Wasserschlag" ausbleibt. Dies ist auf zwei Faktoren zurückzuführen. Wenn sich das Ventilelement so weit an den Ventilsitz angenähert hat, das es durch die zuströmende Heizflüssigkeit schlagartig auf den Ventilsitz hinuntergedrückt wird, sorgt die Anschlaghilfseinrichtung in den meisten Fällen dafür, daß der "Aufprall" des Ventilelements auf dem Ventilsitz gedämpft wird. Zum zweiten folgt dem Aufschlagen des Ventilelements auf dem Ventilsitz eine weitere Bewegung des Ventilelements oder eines Teils davon in die gleiche Richtung, d.h. in die Schließrichtung. Dies hat zur Folge, daß die Ventilkammer vergrößert wird, d.h. es steht durch die Bewegung des Ventilelements oder eines Teils davon ein größeres Volumen der Ventilkammer (oder eines damit zusammenhängenden Raums) zur Verfügung, in das das zuströmende Wasser ohne Druckerhöhung, ausweichen kann. Diese Vergrößerung muß nicht übermäßig groß sein. Das von dem Ventilelement freigegebene Volumen reicht aber aus, um die nachströmende Flüssigkeit aufzunehmen, so daß die bislang zu beobachtenden Druckspitzen unterbleiben. Dementsprechend kann man das Heizkörperventil nun unabhängig von der Durchströmungsrichtung betreiben, muß also beim Einbauen nicht mehr darauf achten, daß man den Einströmanschluß mit der Zuflußleitung und dem Ausströmanschluß mit der Abflußleitung verbindet.

Hierbei ist bevorzugt, daß die Anschlaghilfseinrichtung durch eine Federanordnung gebildet ist, die dem Ventilelement und/oder dem Ventilsitz zugeordnet ist. Die Federanordnung stellt sicher, daß die Ausweichbewegung, die das Ventilelement unmittelbar nach dem Auftreffen auf den Ventilsitz durchführt, wieder rückgängig gemacht wird. Damit steht auch für den nächsten Schließvorgang die gewünschte Strecke für die Ausweichbewegung zur Verfügung. Darüber hinaus wird nach jedem Schließvorgang wieder ein definierter Zustand hergestellt. Die Federanordnung kann zusätzlich noch dazu genutzt werden, die Ausweichbewegung an die Höhe des Differenzdrucks zwischen dem Ausströmanschluß und dem Einströmanschluß anzupassen. Falls diese Differenzdrücke nur klein sind, ist eine derartige Ausweichbewegung nicht erforderlich und in manchen Fällen sogar störend. Beispielsweise könnte sie dazu führen, daß ein Heizkörper laufend "eingeschaltet" ist, d.h. von Wasser durchströmt wird, auch wenn dies gar nicht beabsichtigt ist. Bei größeren Differenzdrücken hingegen ist die Ausweichbewegung dann durch die Federanordnung gesteuert möglich.

Vorzugsweise ist am Ventilelement eine deformierbare Zone ausgebildet. Diese deformierbare Zone dient dann als Anschlaghilfseinrichtung oder als Teil davon. Wenn das Ventilelement auf den Ventilsitz aufprallt, dann ergibt sich ab der Berührung des Ventilelementes mit dem Ventilsitz der geschlossene Zustand des Heizkörperventils. Das Ventilelement kann aber weiterbewegt werden, indem es die deformierbare Zone deformiert. Damit kann das Ventilelement sein Volumen verringern und ein entsprechendes Volumen in der Ventilkammer freigeben. Die Deformation ist elastisch, d.h. die deformierbare Zone wirkt als Feder und nimmt ihre ursprüngliche Form später wieder an.

Hierbei ist bevorzugt, daß die deformierbare Zone dem Ventilsitz benachbart ist. Die Volumenvergrößerung der Ventilkammer ist dann am größten.

Vorzugsweise ist die deformierbare Zone als Ringwand ausgebildet. Dies ist eine relativ einfache konstruktive Möglichkeit, eine deformierbare Zone zu erzeugen.

Hierbei ist besonders bevorzugt, daß die Ringwand aus einem gummielastischem Material gebildet ist. Dieses Material läßt sich leicht verformen, nimmt aber nach dem Ausbleiben der durch den Druckstoß verursachten Kräfte wieder seine ursprüngliche Form an. Darüber hinaus kann man mit dem gummielastischem Material für eine Dichtigkeit des Heizkörperventils sorgen.

Vorzugsweise weist das Ventilelement einen mit einem kompressiblen Fluid gefüllten Druckraum auf, der von der Ventilkammer durch eine verformbaren Membrane getrennt ist. Die Membrane kann beispielsweise durch die Ringwand gebildet sein. Im Grunde genommen besteht eine Möglichkeit, den Druckraum einfach dadurch zu bilden, daß man die Ringwand abdeckt. Das kompressible Fluid läßt sich zwar zusammendrücken, dehnt sich aber wieder aus, wenn die äußeren Kräfte schwächer werden, so daß das Ventilelement wieder seine ursprüngliche Form zurückgewinnt. Natürlich kann der Druckraum auch an anderer Stelle des Ventilelements angeordnet sein. In diesem Fall bewegt sich zwar das Ventilelement nicht mehr im Bereich des Ventilsitzes, sondern es bewegt sich nur ein Teil des Ventilelements, nämlich die Membrane, die in den Druckraum hineinverformt wird. Auch dadurch ist es aber möglich, in der Ventilkammer die gewünschte Volumenvergrößerung zu bewirken.

Bevorzugterweise weist das Ventilelement auf seiner dem Ventilsitz zugewandten Seite einen von einer verformbaren Wand abgedeckten Ausweichbereich auf, der mit der Ventilkammer über einen Kanal im Ventilelement in Verbindung steht. Die Wand kann sich auch dann, wenn das Ventilelement am Ventilsitz anliegt, noch in Schließrichtung weiter verformen. Sie verformt sich dann sozusagen in die Öffnung hinein, die vom Ventilsitz umgeben ist. Auch dadurch wird ein Volumen vergrößert, das mit der Ventilkammer verbunden ist und zwar über den Kanal im Ventilelement. Die zuströmende Flüssigkeit kann dann in dieses Volumen ausweichen, wodurch der Wasserschlag abgemildert oder sogar vermieden wird.

Alternativ oder zusätzlich dazu kann vorgesehen sein, daß der Ventilsitz auf einem Ventilsitzträger angeordnet ist, der über eine Feder im Gehäuse abgestützt ist. Wenn das Ventilelement am Ventilsitz zur Anlage gekommen ist, ist das Heizkörperventil geschlossen. Das Ventilelement kann sich aber zusammen mit dem Ventilsitzträger noch etwa weiter in die gleiche Richtung wie beim Schließen bewegen, wodurch das Volumen der Ventilkammer entsprechend vergrößert wird, um einen Druckstoß aufzufangen.

Hierbei ist bevorzugt, daß der Ventilsitzträger einen Anschlag aufweist, der unter der Wirkung der Feder an einem Gegenanschlag im Gehäuse anliegt. Anschlag und Gegenanschlag definieren also die Ruhestellung des Ventilsitzträgers und damit die Position des Ventilsitzes.

Vorzugsweise ist der Anschlag durch einen Ring gebildet, der in einer Nut im Ventilsitzträger angeordnet ist und aus dieser Nut radial vorsteht. Dies erleichtert die Fertigung. Man kann den Ring beispielsweise als Feder- oder Sprengring ausbilden, der zusammengedrückt wird, wenn der Ventilsitzträger in das Gehäuse eingesetzt wird. Dort kann er sich ausweiten und kommt dann hinter dem Gegenanschlag zum Liegen.

Vorzugsweise ist zwischen dem Ventilsitzträger und dem Gehäuse ein Dichtring angeordnet. Dieser Dichtring sichert, daß keine Heizkörperflüssigkeit zwischen dem Ventilsitzträger und dem Gehäuse an der durch Ventilelement und Ventilsitz gebildeten Dichtstelle vortreten kann.

Die Erfindung wird im folgenden anhand eines bevorzugten Ausführungsbeispiels in Verbindung mit der Zeichnung näher beschrieben. Hierin zeigen:
- Fig. 1: eine erste Ausführungsform eines Heizkörperventils,
- Fig. 2: eine vergrößerte Darstellung eines Ausschnitts des Heizkörperventils nach Fig. 1,
- Fig. 3: eine zweite Ausführungsform eines Heizkörperventils und
- Fig. 4: eine dritte Ausführungsform eines Heizkörperventils

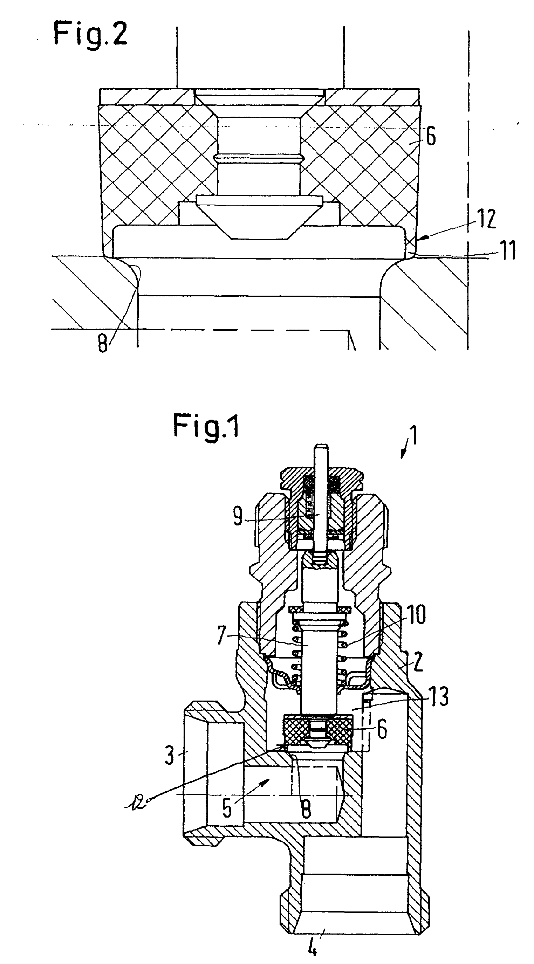

Fig. 1 zeigt ein Heizkörperventil 1 mit einem Gehäuse 2, das einen Einströmanschluß 3 und einen Ausströmanschluß 4 aufweist. Zwischen dem Einströmanschluß 3 und dem Ausströmanschluß 4 ist eine Absperreinrichtung 5 angeordnet, die ein Ventilelement 6 aufweist, das von einem Ventilstößel 7 betätigbar ist und das mit einem Ventilsitz 8 zusammenwirkt. Der Ventilstößel 7 wird in an sich bekannter und daher nicht näher dargestellter Weise über einen Betätigungsstift 9 von einem Thermostataufsatz oder eine ähnlichen Betätigungseinrichtung betätigt. Eine Feder 10 wirkt so auf den Ventilstößel 7, daß das Ventilelement 6 vom Ventilsitz 8 weg bewegt wird.

Fig 2. zeigt eine vergrößerte Darstellung des Ventilelements 6 auf dem Ventilsitz 8. Dabei ist erkennbar, daß das Ventilelement 6 in Richtung auf den Ventilsitz 8 in einer Ringwand 11 endet, die eine deformierbare Zone 12 bildet. Die Ringwand weist eine Länge im Bereich von etwa 0,8 bis 2 mm, vorzugsweise ca. 1 mm und eine radiale Dicke im Bereich von etwa 0,25 bis 0,4 mm, vorzugsweise ca. 0,3 mm auf. Sie ist, wie auch das übrige Ventilelement 6 aus einem gummieleastischem Material gebildet, beispielsweise einem synthetischen Gummi. Versuche haben ergeben, daß eine Deformierbarkeit um 1 mm bereits ausreicht, um das erforderliche Volumen in der Ventilkammer freizugeben. Das freigegebene Volumen entspricht dann der Grundfläche des Ventilelements abzüglich der Grundfläche des Ventilstößels mal der Deformationslänge. Auch wenn das dabei freiwerdende Volumen in der Regel kleiner als ein Milliliter ist, reicht es aus, um den Wasserschlag zu vermeiden.

Das Ventilelement 6 ist in einer Ventilkammer 13 bewegbar, wenn das Ventil geöffnet oder geschlossen wird. Die Ventilkammer 13 steht mit dem Auslaßanschluß 4 in Verbindung.

Wenn nun das Ventil "richtig" betrieben wird, dann strömt das Wasser (oder eine andere Heizflüssigkeit) durch den Einströmanschluß 3 ein tritt durch den Ventilsitz 8 hindurch und strömt das Ventilelement 6 von "unten", d.h. der dem Ventilsitz 8 zugewandten Seite her, an. Das Wasser strömt dann durch die Ventilkammer 13 zum Ausströmanschluß 4. Wenn das Ventil geschlossen wird, dann bewegt sich das Ventilelement 6 auf den Ventilsitz 8 zu. Hierbei erfolgt eine allmähliche Drosselung des Flüssigkeitsstromes, ohne daß ein "Wasserschlag" auftritt.

Wenn nun das Ventil "verkehrt" montiert wird, dann strömt das Wasser durch den Ausströmanschluß 4 zu und tritt über die Ventilkammer 13 am Ventilelement 6 vorbei durch den Ventilsitz 8 und gelangt schließlich zum Einströmanschluß 3. Wenn sich bei dieser Konstellation das Ventilelement bis auf einen kleinen Abstand an den Ventilsitz 8 angenähert hat, dann erfolgt ein schlagartiges Absenken des Ventilelements 6 auf den Ventilsitz 8, bedingt durch die Wirkung des zuströmenden Wassers. Bei diesem abrupten Schließen des Heizkörperventils 1 entsteht normalerweise der bekannte Wasserschlag. Im vorliegenden Fall bleibt dieser Wasserschlag jedoch aus, weil die Druckerhöhung in der Ventilkammer 13 bewirkt, daß das Ventilelement 6 unter Deformation der deformierbaren Zone 12 weiter in Richtung auf den Ventilsitz 8 zu bewegt wird. Dabei verkleinert sich das vom Ventilelement 6 beanspruchte Volumen um den Betrag, um den es durch die Deformation der deformierbaren Zone 12 kleiner wird. Dieses Volumen vergrößert dann das Volumen der Ventilkammer 13. Auch wenn die entsprechende Volumenvergrößerung nur klein ist, reicht sie doch aus, um den "Wasserschlag" zu vermeiden. Die Druckerhöhung wird durch eine Volumenvergrößerung aufgefangen.

Dadurch, daß die Ringwand 11 aus einem gummielastischen Material gebildet ist, federt sie, wenn der Druckstoß vorbei ist, wieder in ihre ursprüngliche Gestalt zurück. Darüber hinaus läßt sich durch die "Federkonstante" der Ringwand 11 in gewissen Grenzen die Kraft einstellen, die erforderlich ist, um die Zone 12 zu deformieren.

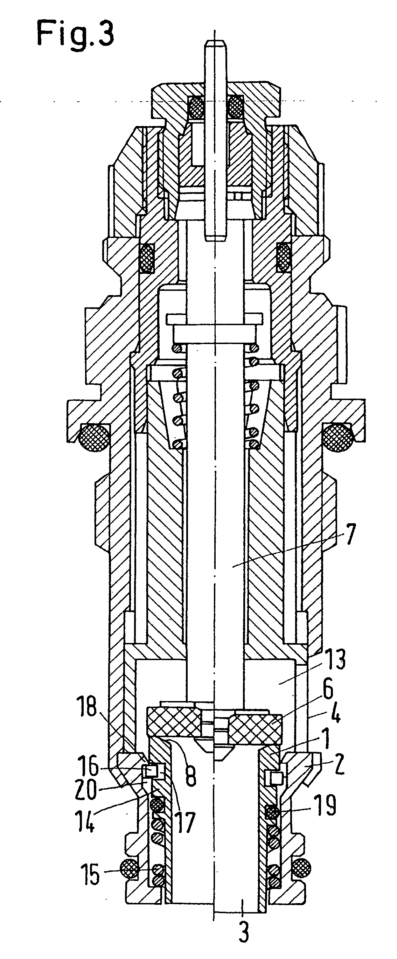

Fig. 3 zeigt eine abgewandelte Ausführungsform, bei der der Ventilsitz ausweichen kann. Diese Form kann aber auch mit einer deformierbaren Zone (Anschlaghilfseinrichtung) am Ventilelement 6 zusammen eingesetzt werden. Gleiche und einander entsprechende Teile sind mit den gleichen Bezugszeichen versehen. In Fig. 3 sind die meisten Gehäuseteile weggelassen.

Der Ventilsitz 8 ist an einem Ventilsitzträger 14 angeordnet. Der Ventilsitzträger ist über eine Feder 15 am Gehäuse 2 abgestützt. An seinem dem Ventilelement 6 zugewandten Ende weist der Ventilsitzträger eine Nut 17 auf, in der ein Sprengring 16 oder ein anderer Federring) angeordnet ist, der radial etwas aus der Nut 17 herausragt, so daß er unter der Wirkung der Feder 15 an einem Gegenanschlag 18 im Gehäuse anliegen kann. Zwischen dem Ventilsitzträger 14 und dem Gehäuse ist ein Dichtring 19 angeordnet. Der Gegenanschlag 18 bildet eine Grenze einer Bewegungsbahn 20 für den Sprengring 16 im Gehäuse 2. Diese Bewegungsbahn hat eine Erstreckung in der Größenordnung von 1 bis 3 mm.

In der linken Hälfte von Fig. 3 ist eine Situation dargestellt, in der das Ventilelement 6 am Ventilsitz 8 anliegt und der Ventilsitzträger 14 sich in seiner Ruheposition befindet. Die rechte Hälfte von Fig. 3 stellt eine Situation dar, in der der Ventilsitzträger 14 mit an liegendem Ventilelement 6 eingefedert ist, um das Volumen der Ventilkammer 13 zu vergrößern.

Die Funktion dieses Heizkörperventils ist ähnlich wie die der Ausführungsform nach Fig. 1. Wenn sich das Ventilelement 6 bei "falscher" Strömungsrichtung auf den Ventilsitz 8 absenkt, wird es bei Erreichen eines gewissen Mindestabstands schlagartig auf den Ventilsitz 8 abgesenkt. Der Ventilsitzträger 14 wird dann durch das Ventilelement 6 und den darauf wirkenden Druck in der Ventilkammer 13 weiter in die Richtung bewegt, in der auch das Ventilelement 6 beim Schließen bewegt worden ist. Dadurch wird das Volumen der Ventilkammer 13 vergrößert, so daß der Wasserschlag ausbleibt. Hier bildet der bewegbare Ventilsitz/Ventilsitzträger die Anschlaghilfseinrichtung.

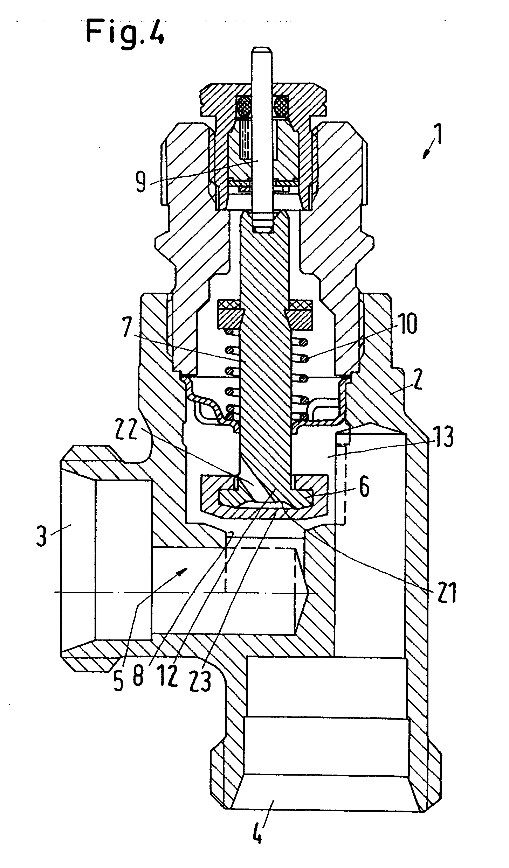

Fig. 4 zeigt eine weitere Ausgestaltung eines Heizkörperventils, die weitgehend der von Fig. 1 entspricht. Gleiche Teile sind daher mit gleichen Bezugszeichen versehen.

Geändert hat sich allerdings die Ausbildung des Ventilelements 6. Das Ventilelement 6 wird in dem Bereich, der später am Ventilsitz 8 anliegt, mit einer Gummimembran überzogen, die später eine Wand 23 an einem Ausgleichsbereich 21 bildet. Der Ausgleichsbereich 21 ist hier als Hohlraum dargestellt. Dies ist aber nicht unbedingt erforderlich. Die Wand 23 kann auch am Ventilelement 6 anliegen. Der Ausgleichsbereich 21 ist über einen Kanal 22, der das Ventilelement 6 durchsetzt, mit der Ventilkammer 13 verbunden.

Wenn nun das Ventil geschlossen ist, d.h. das Ventilelement 6 unter Zwischenlage der Wand 23 am Ventilsitz 8 anliegt, dann kann sich die Wand 23, die dann die Anschlaghilfseinrichtung bildet, bei einem Druckanstieg am Ausströmanschluß 4 in den Ventilsitz hineinverformen und somit das mit der Ventilkammer 13 zusammenhängende Volumen vergrößern. Diese Volumenvergrößerung ist zwar nur klein, sie reicht aber aus, um die bei einem Wasserschlag zuströmende Flüssigkeitsmenge aufzunehmen und damit die "Wasserschlag"-Effekte zu entschärfen.

## Patentansprüche

1. Heizkörperventil mit einem Gehäuse, das einen Einströmanschluss und einen Ausströmanschluss aufweist, wobei im Strömungspfad zwischen Einströmanschluss und Ausströmanschluss eine Absperreinrichtung angeordnet ist, die einen Ventilsitz und ein damit zusammenwirkendes, von einer Feder belastetes Ventilelement aufweist, wobei das Ventilelement in einer Ventilkammer bewegbar ist, wobei die Feder 10 bewirkt, dass das Ventilelement (6) vom Ventilsitz (8) weg bewegt wird; **dadurch gekennzeichnet, dass** die Absperreinrichtung (5) eine Anschlagshilfseinrichtung (12, 14, 23) aufweist, die dem am Ventilsitz (8) anliegenden Ventilelement (6) oder einem Teil davon eine Weiterbewegung in Schliessrichtung unter Vergrösserung des Volumens der Ventilkammer (13) erlaubt.

2. Ventil nach Anspruch 1, **dadurch gekennzeichnet, daß** die Anschlaghilfseinrichtung durch eine Federanordnung (12, 15) gebildet ist, die dem Ventilelement und/oder dem Ventilsitz (8) zugeordnet ist.

3. Ventil nach Anspruch 1 oder 2, **dadurch gekennzeichnet, daß** am Ventilelement (6) eine deformierbare Zone ausgebildet ist.

4. Ventil nach Anspruch 3, **dadurch gekennzeichnet, daß** die deformierbare Zone (12) dem Ventilsitz (8) benachbart ist.

5. Ventil nach Anspruch 4, **dadurch gekennzeichnet, daß** die deformierbare Zone (12) als Ringwand (11) ausgebildet ist.

6. Ventil nach Anspruch 5, **dadurch gekennzeichnet, daß** die Ringwand (11) aus einem gummieleastischem Material gebildet ist.

7. Ventil nach einem der Ansprüche 1 bis 6, **dadurch gekennzeichnet, daß** das Ventilelement (6) einen mit einem kompressiblen Fluid gefüllten Druckraum aufweist, der von der Ventilkammer durch eine verformbare Membrane getrennt ist.

8. Ventil nach einem der Ansprüche 1 bis 7, **dadurch gekennzeichnet, daß** das Ventilelement (6) auf seiner dem Ventilsitz (8) zugewandte Seite einen von einer verformbaren Wand (23) abgedeckten Ausweichbereich (21) aufweist, der mit der Ventilkammer (13) über einen Kanal (22) im Ventilelement (6) in Verbindung steht.

9. Ventil nach einem der Ansprüche 1 bis 8, **dadurch gekennzeichnet, daß** der Ventilsitz (8) auf einem Ventilsitzträger (14) angeordnet ist, der über ein Feder (15) im Gehäuse (2) abgestützt ist.

10. Ventil nach Anspruch 9, **dadurch gekennzeichnet, daß** der Ventilsitzträger (14) einen Anschlag (16) aufweist, der unter der Wirkung der Feder (15) an einem Gegenanschlag (18) im Gehäuse anliegt.

11. Ventil nach Anspruch 10, **dadurch gekennzeichnet, daß** der Anschlag (16) durch einen Ring gebildet ist, der in einer Nut (17) am Ventilsitzträger (14) angeordnet ist und aus dieser Nut (17) radial vorsteht.

12. Ventil nach einem der Ansprüche 9 bis 11, **dadurch gekennzeichnet, daß** zwischen dem Ventilsitzträger (14) und dem Gehäuse (2) ein Dichtring (19) angeordnet ist.

## Claims

1. Radiator valve with a housing having an inlet connection and an outlet connection, a shut-off arrangement being located in the flow path between the inlet connection and the outlet connection, the shut-off arrangement having a valve seat and a spring-loaded valve element interacting with the valve seat, the valve element being movable in a valve chamber, the spring moving the valve element in a direction away from the valve seat, **characterised in that** the shut-off arrangement (5) has an auxiliary stop arrangement (12, 14, 23) permitting the valve element (6) resting on the valve seat (8), or a part of the valve element (6), to move further in the closing direction under an increase of the volume of the valve chamber (13).

2. Valve according to claim 1, **characterised in that** the auxiliary stop arrangement is formed by a spring arrangement (12, 15) allocated to the valve element and/or the valve seat (8).

3. Valve according to claim 1 or 2, **characterised in that** a deformable zone is formed on the valve element (6).

4. Valve according to claim 3, **characterised in that** the deformable zone (12) is adjacent to the valve seat (8).

5. Valve according to claim 4, **characterised in that** the deformable zone (12) has the shape of an annular wall (11).

6. Valve according to claim 5, **characterised in that** the annular wall (11) is made of an elastic material.

7. Valve according to one of the claims 1 to 6, **characterised in that** the valve element (6) has a pressure chamber that is filled with a compressible fluid, the pressure chamber being separated from the valve chamber by a deformable membrane.

8. Valve according to one of the claims 1 to 7, **characterised in that** the side of the valve element (6) facing the valve seat (8) has an evasion area (21) covered by a deformable wall (23), the evasion area (21) being connected to the valve chamber (13) via a channel (22) in the valve element (6).

9. Valve according to one of the claims 1 to 8, **characterised in that** the valve seat (8) is arranged on a valve seat carrier (14) that is supported in the housing (2) via a spring (15).

10. Valve according to claim 9, **characterised in that** the valve seat carrier (14) has a stop (16), which bears on a counter-stop (18) in the housing under the influence of the spring (15).

11. Valve according to claim 10, **characterised in that** the stop (16) is formed by a ring, which is located in a groove (17) in the valve seat carrier (14) and projects radially from this groove (17).

12. Valve according to one of the claims 9 to 11, **characterised in that** a sealing ring (19) is arranged between the valve seat carrier (14) and the housing (2).

## Revendications

1. Soupape de radiateur avec un logement qui présente un raccordement d'entrée et un raccordement de sortie, dans lequel, dans une voie d'écoulement entre le raccordement d'entrée et le raccordement de sortie, est disposé un dispositif de blocage qui présente un siège de soupape et un élément de soupape coopérant avec celui-ci, et précontraint par un ressort, de sorte que l'élément de soupape est mobile dans une chambre de soupape, le ressort (10) agissant de telle sorte que l'élément de soupape (6) est éloigné du siège de soupape (8), **caractérisée en ce que** le dispositif de blocage (5) présente un système auxiliaire de butée (12, 14, 23) qui permet un déplacement additionnel de l'élément de soupape (6) au niveau du siège de soupape (8) ou à une partie de celui-ci, dans la direction de fermeture, en cas d'augmentation du volume de la chambre de soupape (13).

2. Soupape selon la revendication 1, **caractérisée en ce que** le dispositif auxiliaire de butée est formé par un agencement de ressorts (12, 15) qui est associé à l'élément de soupape et/ou au siège de soupape (8).

3. Soupape selon la revendication 1 ou 2, **caractérisée en ce qu'**une zone déformable est formée sur l'élément de soupape (6).

4. Soupape selon la revendication 3, **caractérisée en ce que** la zone déformable (12) est limitrophe du siège de soupape (8).

5. Soupape selon la revendication 4, **caractérisée en ce que** la zone déformable (12) est formée comme paroi périphérique (11).

6. Soupape selon la revendication 5, **caractérisée en ce que** la paroi périphérique (11) est formée par un matériau caoutchouc élastique.

7. Soupape selon l'une des revendications 1 à 6, **caractérisée en ce que** l'élément de soupape (6) présente une chambre de pression remplie d'un fluide compressible, qui est séparée de la chambre de soupape par une membrane déformable.

8. Soupape selon l'une des revendications 1 à 7, **caractérisée en ce que** l'élément de soupape (6) présente, sur son côté dirigé vers le siège de soupape (6), une zone d'évitement (21) recouverte par une paroi déformable (23), qui est en communication avec la chambre de soupape (13) par l'intermédiaire d'un canal (22) dans l'élément de soupape (6).

9. Soupape selon l'une des revendications 1 à 8, **caractérisée en ce que** le siège de soupape (8) est disposé sur un support de siège de soupape (14) qui est soutenu par un ressort (15) dans le logement (2).

10. Soupape selon la revendication 9, **caractérisée en ce que** le support de siège de soupape (14) présente une butée (16) qui s'appuie, sous l'effet du ressort (15), sur une contrebutée (18) dans le logement.

11. Soupape selon la revendication 10, **caractérisée en ce que** la butée (16) est formée par un anneau qui est agencé dans une gorge (17) sur le support de siège de soupape (14) et qui fait saillie radialement à partir de cette gorge (17).

12. Soupape selon l'une des revendications 9 à 11, **caractérisée en ce qu'**entre le support de siège de soupape (14) et le logement (2), est agencée une bague d'étanchéité (19).
